# NEUE EUROPÄISCHE PATENTSCHRIFT

(11) **EP 0 935 023 B2**
(45) Veröffentlichungstag und Bekanntmachung des Hinweises auf die Entscheidung über den Einspruch: **10.05.2017**
(45) Hinweis auf die Patenterteilung: 12.10.2005
(21) Anmeldenummer: 99102125.4
(22) Anmeldetag: 03.02.1999
(51) Int. Cl.: E01C 19/26, B62D 33/073

(54) **Bodenverdichtungsvorrichtung und Verfahren zur Steuerung ihres Lenkantriebes**
Soil compacting machine and method for controlling the steering of the same
Dispositif pour compacter le sol et procédé pour contrôler son système de direction

(30) Priorität: 09.02.1998 DE 19805038
(43) Veröffentlichungstag der Anmeldung: 11.08.1999
(73) Patentinhaber: BOMAG GmbH, 56154 Boppard (DE)
(72) Erfinder: Laux, Robert, Dipl.-Ing. FH, 56283 Halsenbach (DE)
(74) Vertreter: Lang, Friedrich

(56) Entgegenhaltungen:
- DE-A- 19 536 987
- DE-A1- 2 362 841
- DE-A1- 2 952 536
- DE-A1- 3 133 985
- DE-A1- 4 334 742
- DE-A1- 19 607 429
- JP-A- H03 132 502
- US-A- 3 279 813
- US-A- 3 868 194
- US-A- 4 043 422

## Beschreibung

Die Erfindung betrifft eine zweibandagige Straßenwalze mit Doppelschemellenkung, sowie ein Verfahren zur Steuerung ihres Lenk- und Fahrantriebes, wobei der Lenkantrieb beider getrennt ansteuerbaren Walzenbandagen von einer Steuerungsvorrichtung in Abhängigkeit der vom Walzenführer ausgewählten Lenkvorgaben und/oder dem Lenkmodus gesteuert wird, wie in US-A-4 043 422 beschrieben ist.

Für derartige Sraßenwalzen ist bereits eine Vielzahl unterschiedlicher Lenk- und Steuerungsmöglichkeiten bekannt, wobei die Steuerungsvorrichtung den Lenkantrieb beider Bandagen in einem auswählbaren Lenkmodus derart steuert, daß die jeweils in Fahrtrichtung vordere Bandage als aktive Bandage durch die Lenkvorgaben angesteuert wird bekannt, die das Arbeiten mit diesen Walzen vereinfachen. Gleichzeitig bringt diese große Variantenvielfalt allerdings die Gefahr mit sich, daß der Walzenführer durch die während des Arbeitens dementsprechend erforderliche große Anzahl an Steuerungseingaben und Bedienschritten seine eigentliche Bodenverdichtungsarbeit nur mit beschränkter Aufmerksamkeit durchführen kann.

Hiervon ausgehend liegt der vorliegenden Erfindung die Aufgabe zurgrunde, das Arbeiten mit den Straßenwalzen der eingangs genannten. Art weiter zu vereinfachen, um hierdurch eine Produktivitätssteigerung zu erzielen.

Diese Aufgabe wird erfindungsgemäß dadurch gelöst, daß die Steuerungsvorrichtung bei oder nach einem Fahrtrichtungswechsel den Lenkantrieb beider Bandagen derart steuert, dass durch den Lenkantrieb die in Fahrtrichtung hintere Bandage als passive Bandage in die jeweilige Nullstellung überführt wird. Hierdurch ergibt sich der Vorteil, daß der Walzenführer bei einem Fahrtrichtungswechsel, also bei einem Wechsel von einer Vorwärts- in eine Rückwärtsfahrt bzw. umgekehrt, nicht erst die jeweils in Fahrtrichtung vordere Bandage separat als lenkbare aktive Bandage ansteuern muß, indem er beispielsweise die Lenkart bei dem Fahrtrichtungswechsel ändert, sondern daß die Steuerungsvorrichtung in dem nachfolgend als "Frontlenkung" bezeichneten Lenkmodus selbsttätig das Ansteuern umsfellt. Gleichzeitig wird vermieden, daß der Walzenführer zur Umgehung eines manuellen Umschaltens in der einen Fahrtrichtung mit Frontlenkung und in der entgegengesetzten Fahrtrichtung mit Hecklenkung fährt.

Das erfindungsgemäße Verfahren der automatischen Umschaltung führt aber nicht nur dazu, daß der Bedienkomfort für den Walzenführer verbessert wird, sondern daß insbesondere die Betriebssicherheit der Straßenwalze erhöht wird, indem sich der Walzenführer nun voll auf das Lenken mit immer demselben Lenkmodus konzentrieren kann und sich nicht bei jedem Fahrtwechsel zum einen sich auf einen anderen Lenkmodus einstellen und zum anderen zusätzlich zum Umschalten der Fahrtrichtung auch noch die Lenkart manuell umschalten muß.

Erfindungsgemäß schaltet also die Steuerungsvorrichtung bei und/oder nach Eingabe eines Fahrtrichtungswechsels das Ansteuern der Lenkentriebe der Bandagen um, wobei das Umschalten entweder sofort durchgeführt werden kann derart, daß beim Fahrtrichtungswechsel die vor dem Wechsel vordere, aktive Bandage nun als hintere, passive Bandage angesteuert und in die Nullstellung überführt wird, während die vor dem Wechsel hintere, passive in der Nullstellung befindliche Bandage danach als aktive, vordere Bandage entsprechend der jeweiligen Lenkvorgabe angesteuert wird. Oder aber die Steuerungsvorrichtung führt das Umschalten der Bandagen sukzessive derart durch, daß die nach dem Fahrtrichtungswechsel hintere Bandage so lange als aktive Bandage angesteuert wird, bis sie einen voreingestellten Wert erreicht, woraufhin dann die umgeschaltete Ansteuerung die hintere Bandage als passive und die vordere Bandage als aktive Bandage ansteuert, wobei bis zum Umschalten die vordere Bandage passiv ist und in ihrer Nullstellung verbleibt.

Was diesen voreingestellten, das Umschalten der Bandagen auslösenden Wert betrifft, so kann es sich hierbei beispielsweise um die Lenkstellung bzw. den Lenkeinschlag der in Fahrtrichtung nach dem Wiederanfahren hinteren Bandagen handeln, so daß erst bei Erreichen ihrer Nullstellung umgeschaltet wird. Ebenso ist es aber auch möglich und vorteilhaft, als voreingestellten Wert die Fahrtgeschwindigkeit dieser Bandage nach dem Wiederanfahren zu verwenden, so daß erst beim Erreichen einer vorgegebenen Fahrtgeschwindigkeit die hintere Bandage in Nullstellung überführt und dann die Ansteuerung der Bandagen umgeschaltet wird. Durch beide und auch andere ähnliche Maßnahmen läßt sich verhindern, daß die Bandagen im Stand gelenkt werden, was unter Umständen Beschädigungen an der zu verdichtenden Oberfläche hervorrufen könne.

Bezüglich der Überführung der hinteren Bandagen in der Nullstellung ist es unter Umständen zur Schonung des Belags außerdem zweckmäßig, wenn diese mit einer Geschwindigkeit erfolgt, die von der Fahrtgeschwindigkeit abhängt, also bei kleinen Geschwindigkeiten die Bandage nur langsam verschwenkt wird.

Zweckmäßigerweise ist der gewählte Modus "Frontlenkung" anderen Lenkart-Einstellungen überlagerbar, so daß ein voreingestellter Spurversatz bei der Umschaltung berücksichtigt werden kann derart, daß der Versatzwinkel der beiden Bandagen gegenüber der Walzenlängsachse zu einer Nullstellungsverschiebung führt, so daß die Nullstellung dann erreicht ist, wenn der Lenkwinkel der Bandage dem Versatzwinkel entspricht.

Was das Steuerungsverfahren innerhalb der Steuerungsvorrichtung betrifft, so besteht dieses beispielsweise darin, daß die jeweiligen Lenkwinkel der Walzenbandagen als Istwerte an die Steuerungsvorrichtung übermittelt werden, daß die Steuerungsvorrichtung das Ansteuern der Bandagen durchführt, indem die durch die Lenkvorgaben vom Walzenführer eingegebenen Sollwerte den Istwerten gegenübergestellt werden, und daß die Lenkantriebe im Sinne eines Soll-Istwert-Abgleichs angesteuert werden. Hierbei wird der der Nullstellung entsprechende Sollwert der jeweiligen passiven Bandage von der Steuerungsvorrichtung vorgegeben.

Neben dem Verfahren zur Steuerung des Fahrantriebs einer Straßenwalze erstreckt sich die vorliegende Erfindung auch auf die Straßenwalze mit Doppelschemellenkung selbst, wobei die Straßenwalze zwei getrennt durch eine Steuerungsvorrichtung in Abhängigkeit der vom Walzenführer ausgewählten Lenkvorgaben und/oder dem Lenkmodus über jeweils einen Lenkantrieb ansteuerbare Walzenbandagen aufweist, wobei die Steuerungsvorrichtung derart steuerbar ist; daß sie in einem auswählbaren Lenkmodus (nachfolgend als "Frontlenkung" bezeichnet) die Lenkantriebe der beiden Bandagen in Abhängigkeit der Fahrantriebsvorgaben ansteuert, so daß der Lenkantrieb der jeweils in Fahrtrichtung vorderen Bandage zur Ausführung der Lenkvorgaben dient.

Die erwähnten erfindungsgemäßen Vorteile lassen sich durch die Straßenwalze dadurch erreichen, daß an den Walzenbandagen Istwert-Aufnehmer zur Erfassung des Lenkwinkels der Bandagen vorgesehen sind, und dass die Steuerungsvorrichtung an die Istwert-Aufnehmer angeschlossen ist, so dass die Steuerungsvorrichtung bei oder nach einem Fahrtrichtungswechsel derart steuerbar ist, dass der Lenkantrieb der in Fahrtrichtung hinteren Bandage diese als passive Bandage in ihre NullStellung überführt. Erfolgt nun eine Eingabe der Lenkvorgaben als Sollwerte für die Steuerungsvorrichtung etwa über eine Lenkeingabe, die ebenfalls an die Steuerungsvorrichtung angeschlossen ist, so kann die Steuerungvorrichtung über eine einen Soll-Istwert-Abgleich durchführende Steuereinheit für die vorteilhafte Steuerung des Lenk- und Fahrantriebes sorgen.

Schließlich ist an die Steuerungsvorrichtung noch ein Fahrtrichtungssensor angeschlossen, der die Informationen über die vom Walzenführer ausgewählte Fahrtrichtung - also Vorwärts- oder Rückwärtsrichtung - ermittelt und weitergibt, so daß die Steuerungsvorrichtung basierend auf dieser Information die passende Ansteuerung durchführen kann.

Weitere Merkmale und Vorteile der vorliegenden Erfindung ergeben sich aus der nachfolgenden Beschreibung eines Ausführungsbeispiels anhand der Zeichnung; hierbei zeigen
- Figur 1: eine Straßenwalze in perspektivischer Seitenansicht;
- Figur 2: eine schematische Darstellung der Arbeitsweise einer erfindungsgemäßen Straßenwalze; und
- Figur 3: ein schematisches Schaltbild einer erfindungsgemäßen Straßenwalze.

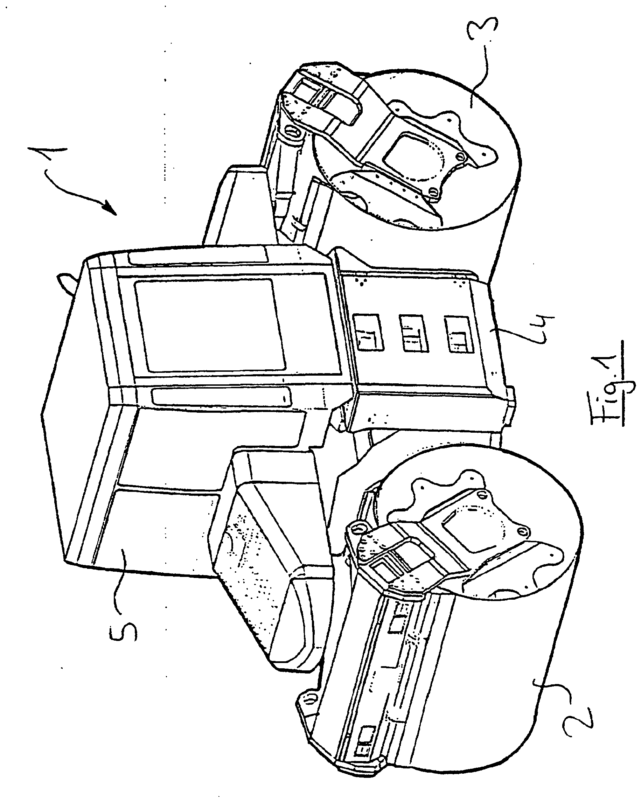

In Figur 1 ist eine Straßenwalze 1 in perspektivischer Seitenansicht dargestellt, die eine Doppelschemellenkung aufweist und hierbei zwei einzeln lenkbare Walzenbandagen 2, 3 umfaßt. Die Walzenbandagen sind über ein Fahrgestell 4 miteinander verbunden, auf dem eine Fahrerkabine 5 für den Walzenführer angeordnet ist.

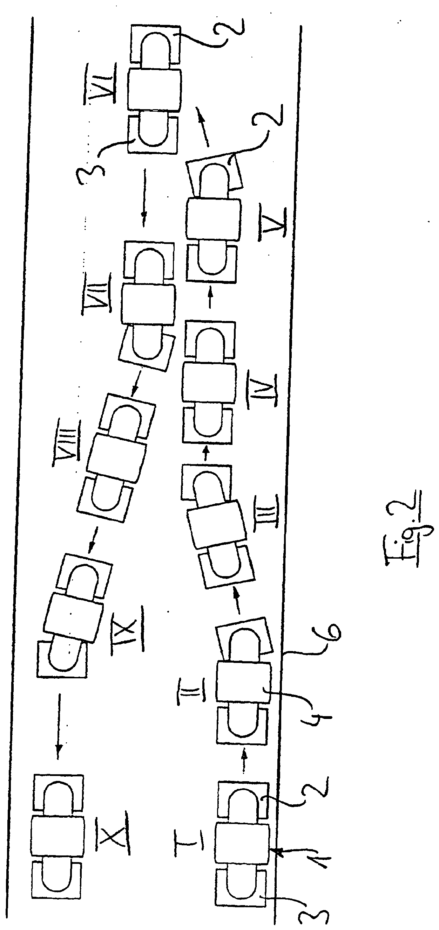

Die Erfindung ist nun aus Figur 2 ersichtlich, in der die Straßenwalze ausgehend von dem Abschnitt I im Vorwärtsgang an einem auf der rechten Seite befindlichen Hindernis 6 entlangfährt und hierbei entsprechend den Abschnitten II, III, IV und V verschiedene Kurvenfahrten vom Hindernis 6 weg durchführt, indem jeweils die in Fahrtrichtung vordere, aktive Bandage 2 angesteuert wird. Die hintere Bandage 3 wird als passive Bandage in Nullstellung belassen, wobei die Achse der Watzenbandage 3 senkrecht zur Längsachse des Fahrgestells 4 der Straßenwalze 1 angeordnet ist.

In Abschnitt V wechselt die Straßenwalze ihre Antriebsrichtung derart, daß sie nunmehr in Rückwärtsgang weiterfährt, wozu im Abschnitt V die vordere Walzenbandage 2, die nach dem Fahrtrichtungswechsel die passive, in Fahrtrichtung hintere Bandage darstellt, in Nullstellung verschwenkt wird, wodurch der zur vereinfachten Darstellung versetzt oberhalb der Darstellung vom Abschnitt V angeordnete Abschnitt VI entsteht.

Bei der nachfolgenden Rückwärtsfahrt ist die Walzenbandage 3 die aktive, also angesteuerte Bandage, wodurch sie die Lenkbewegungen in den Abschnitten VII, VIII, VIIII und X durchführt.

Es sei angemerkt, daß das Umschalten der aktiven in die passive Bandage und umgekehrt und insbesondere das Überführen in die Nullstellung sowohl im Stand als auch erst beim erneuten Anfahren erfolgen kann. Schließlich ist es aber auch möglich, so lange mit den vor dem Fahrtrichtungswechsel aktuellen Ansteuerungsverhättnissen weiterzufahrern, bis die aktive Bandage infolge eines Lenkvorganges in die NullStellung geschwenkt wird, woraufhin dann in dieser kurzfristigen Geradeausfahrt das Umschalten erfolgen kann.

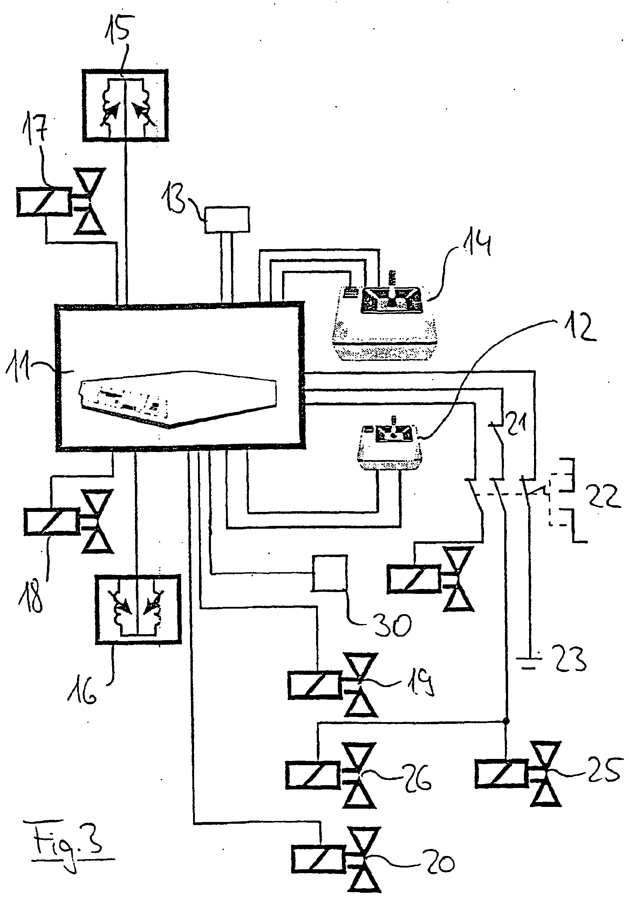

In Figur 3 ist dargestellt, wie das Zusammenspiel von Lenk- und Fahrantrieb erfolgt. Hierbei ist eine Steuerungsvorrichtung 11 vorgesehen, an die zum einen eine Lenkeingabe 12 in Form eines Lenkjoysticks oder Lenkrades und eine Lenkmoduseingabe 13 und zum anderen eine Fahrantriebseingabe 14 in Form eines Schaltjoysticks zur Eingabe der Fahrtrichtung (vorwärts/rückwärts) und des Fahrganges angeschlossen sind.

Weiterhin ist die Steuerungsvorrichtung 11 mit zwei Istwert-Aufnehmern 15, 16 zur Erfassung des Lenkwinkels der Bandagen 2, 3, mit zugehörigen Lenkantrieben 17, 18 für die Bandagen sowie mit einem Fahrtrichtungssensor 30 zur Erfassung der ausgewählten Fahrtrichtung verbunden.

Die Steuerungsvorrichtung arbeitet nun derart, daß bei im Lenkmodus "Frontlenkung" befindlicher Lenkmoduseingabe 12 das Betätigen des Fahrantriebsjoysticks 14 von der Vorwärts- in die Rückwärtsrichtung bzw. umgekehrt dazu führt, daß ein entsprechendes Signal an die Steuerungsvorrichtung 11 gegeben wird, die den Richtungswechsel zunächst einmal zwei Fahrantrieben 19, 20, weiche die beiden Bandagen 2, 3 ansteuern, zuführt. Hierbei werden die beiden Lenkantriebe 17, 18 derart angesteuert, daß der Lenkantrieb der nach dem Fahrtrichtungswechsel in Fahrtrichtung vorderen Walzenbandage aktiv entsprechend den Lenkvorgaben angesteuert wird, während der Lenkantrieb der jeweils hinteren Bandage passiv nur derart angesteuert wird, daß die hintere Bandage in ihre Nullstellung überführt wird. Hierbei sorgen die beiden aus Lenkwinkelsensoren bestehenden Istwert-Aufnehmer 15, 16 dafür, daß die Steuerungsvorrichtung 11 mit Hilfe des jeweils vorliegenden Lenkwinkel-Istwertes die beiden Lenkantriebe 17, 18 solange betätigen kann, bis die Istwerte den durch die Lenkeingabe 12 vorgegebenen Sollwerten entsprechen.

Es sei erwähnt, daß zusätzlich zu den erwähnten Elementen noch eine Bremse 21, ein Notausschalter 22, eine Batterie 23, ein Magnetventil 24 zum Ausschalten des Motors, ein Magnetventil 25 für die Bremse sowie ein Magnetventil 26 für die Fahrpumpe vorgesehen sind und ebenfalls an die Steuerungsvorrichtung angeschlossen sind

Zusammenfassend bietet die vorliegende Erfindung den Vorteil, daß dem Walzenführer eine erleichterte, den Bedienkomfort erhöhende Arbeitsweise seiner Straßenwalze zur Verfügung gestellt wird, die selbsttätig nach erfolgtem Fahrtrichtungswechsel die Lenkart an die neue Fahrtrichtung anpaßt, indem wiederum die in Fahrtrichtung vordere Walzenbandage zur Lenkung angesteuert wird.

## Patentansprüche

1. Verfahren zur Steuerung des Lenk- und Fahrantriebes einer zweibandagigen Straßenwalze mit Doppelschemellenkung, wobei der Lenkantrieb beider getrennt ansteuerbaren Walzenbandagen (2,3) von einer Steuerungsvorrichtung (11) in Abhängigkeit der vom Walzenführer ausgewählten Lenkvorgaben und/oder dem Lenkmodus gesteuert wird, wobei die Steuerungsvorrichtung den Lenkantrieb (17,18) beider Bandagen in einem auswählbaren Lenkmodus derart steuert, dass die jeweils in Fahrtrichtung vordere Bandage als aktive Bandage durch die Lenkvorgaben angesteuert wird,
**dadurch gekennzeichnet,**
**dass** die Steuerungsvorrichtung bei oder nach einem Fahrtrichtungswechsel den Lenkantrieb beider Bandagen derart steuert, dass durch den Lenkantrieb die in Fahrtrichtung hintere Bandage als passive Bandage in ihre Nullstellung überführt wird.

2. Verfahren nach zumindest einem der vorstehenden Ansprüche,
**dadurch gekennzeichnet,**
**dass** bei und/oder nach Eingabe des Fahrtrichtungswechsels die Steuerungsvorrichtung das Ansteuern der Lenkantriebe der Bandagen umschaltet.

3. Verfahren nach zumindest einem der vorstehenden Ansprüche,
**dadurch gekennzeichnet,**
**dass** die Steuerungsvorrichtung das Umschalten der Bandagen sofort durchführt derart, dass beim Fahrtrichtungswechsel die vor dem Wechsel vordere, aktive Bandage nun als hintere, passive Bandage angesteuert und in die Nullstellung überführt wird, während die vor dem Wechsel hintere, passive in der Nullstellung befindliche Bandage danach als aktive, vordere Bandage entsprechend der jeweiligen Lenkvorgabe angesteuert wird.

4. Verfahren nach zumindest einem der vorstehenden Ansprüche,
**dadurch gekennzeichnet,**
**dass** die Steuerungsvorrichtung das Umschalten der Bandagen derart sukzessive durchführt, dass die nach dem Fahrtrichtungswechsel hintere Bandage so lange als aktive Bandage angesteuert wird, bis sie einen voreingestellten Wert erreicht, woraufhin dann die Ansteuerung umgeschaltet wird und die hintere Bandage als passive und die vordere Bandage als aktive Bandage angesteuert wird und dass nach dem Fahrtrichtungswechsel bis zum Umschalten die vordere Bandage passiv ist und in ihrer Nullstellung verbleibt.

5. Verfahren nach Anspruch 4,
**dadurch gekennzeichnet,**
**dass** der voreingestellte, das Umschalten der Bandagen auslösende Wert die Lenkstellung der in Fahrtrichtung nach dem Wiederanfahren hinteren Bandage ist, so dass bei Erreichen der Nullstellung die Ansteuerung umgeschaltet wird.

6. Verfahren nach Anspruch 4,
**dadurch gekennzeichnet,**
**dass** der voreingestellte, das Umschalten der Bandagen auslösende Wert die Fahrtgeschwindigkeit der hinteren Bandage ist, so dass erst bei Erreichen einer vorgegebenen Geschwindigkeit die hintere Bandage in die Nullstellung überführt und die Ansteuerung der Bandagen umgeschaltet wird.

7. Verfahren nach zumindest einem der vorstehenden Ansprüche,
**dadurch gekennzeichnet,**
**dass** die Überführung der nach dem Fahrtrichtungswechsel hinteren Bandage in die Nullstellung mit einer von deren Fahrtgeschwindigkeit abhängenden Geschwindigkeit erfolgt.

8. Verfahren nach zumindest einem der vorstehenden Ansprüche,
**dadurch gekennzeichnet,**
**dass** ein voreingestellter Spurversatz bei der Umschaltung berücksichtigt wird derart, dass der Versatzwinkel der beiden Bandagen gegenüber der Walzenlängsachse zu einer Nullstellungsverschiebung führt, so dass die Nullstellung dann erreicht ist, wenn der Lenkwinkel der Bandage dem Versatzwinkel entspricht.

9. Verfahren nach zumindest einem der vorstehenden Ansprüche,
**dadurch gekennzeichnet,**
**dass** der Steuerungsvorrichtung die jeweiligen Lenkwinkel der Walzenbandagen als Istwerte übermittelt werden, dass die Steuerungsvorrichtung das Ansteuern der Bandagen derart durchführt, dass die durch Lenkvorgaben vom Walzenführer eingegebenen Sollwerte den Istwerten gegenübergestellt werden, und dass die Lenkantriebe im Sinne eines Soll-Istwert-Abgleichs angesteuert werden.

10. Verfahren nach Anspruch 9,
**dadurch gekennzeichnet,**
**dass** der der Nullstellung entsprechende Sollwert der passiven Bandage von der Steuerungsvorrichtung vorgegeben wird.

11. Zweibandagige Straßenwalze mit Doppelschemellenkung, wobei die Straßenwalze zwei getrennt durch eine Steuerungsvorrichtung in Abhängigkeit der vom Walzenführer ausgewählten Lenkvorgaben und/oder dem Lenkmodus über jeweils einen Lenkantrieb ansteuerbare Walzenbandagen aufweist, wobei die Steuerungsvorrichtung (11) derart steuerbar ist, dass sie in einem auswählbaren Lenkmodus die Lenkantriebe (17, 18) der beiden Bandagen (2, 3) in Abhängigkeit der Fahrtrichtung ansteuert, so dass der Lenkantrieb der jeweils in Fahrtrichtung vorderen Bandage zur Ausführung der Lenkvorgaben dient,
**dadurch gekennzeichnet,**
**dass** an den Walzenbandagen (2, 3) Istwert-Aufnehmer (15, 16) zur Erfassung des Lenkwinkels der Bandagen vorgesehen sind, und dass die Steuerungsvorrichtung (11) an die Istwert-Aufnehmer angeschlossen ist, so dass die Steuerungsvorrichtung (11) bei oder nach einem Fahrtrichtungswechsel den Lenkantrieb derart steuert, dass er die in Fahrtrichtung hintere Bandage (2, 3) als passive Bandage in ihre Nullstellung überführt.

12. Bodenverdichtungsvorrichtung nach Anspruch 11,
**dadurch gekennzeichnet,**
**dass** zur Eingabe der Lenkvorgaben als Sollwerte für die Steuerungsvorrichtung (11) zumindest eine Lenkeingabe (12) vorgesehen ist, und dass die Lenkeingabe an die Steuerungsvorrichtung angeschlossen ist.

13. Bodenverdichtungsvorrichtung nach zumindest den Ansprüchen 11 und 12,
**dadurch gekennzeichnet,**
**dass** die Steuerungsvorrichtung (11) eine Steuereinheit für einen Soll-Istwert-Abgleich aufweist.

14. Bodenverdichtungsvorrichtung nach zumindest einem der Ansprüche 11 bis 12,
**dadurch gekennzeichnet,**
**dass** die Steuerungsvorrichtung (11) mit einem Fahrtrichtungssensor (30) zur Erfassung der vom Walzenführer auswählbaren Fahrtrichtung verbunden ist.

## Claims

1. Method for controlling the steering drive and travel drive of a street roller having dual wheels and double-pivot steering, whereby the steering drive of the two separately controllable roller wheels (2, 3) is controlled by one control device (11) as a function of the steering mode and/or the steering specifications selected by the driver of the roller, whereby the control device controls the steering drive (17, 18) of the two wheels in a selectable steering mode such that the wheel at the front in the direction of travel is controlled to be the active wheel based on the steering specifications,
***characterized* in that**
the control device controls the steering drive of both wheels during or after a change in direction of travel such that the wheel at the rear in the direction of travel is changed to its zero position as the passive wheel.

2. Method as claimed in at least one of the preceding claims [sic],
***characterized* in that**
during and/or after input of the change of direction of travel, the control device changes the control of the steering drive of the wheels.

3. Method as claimed in at least one of the preceding claims,
***characterized* in that**
the control device implements the changing of the wheels immediately in such a way that when the direction of travel is changed, the wheel that was the active wheel at the front before the change is then controlled according to the prevailing steering specifications to become the passive rear wheel and is put in the zero position, while the passive rear wheel in the zero position before the change then becomes the active front wheel.

4. Method as claimed in at least one of the preceding claims,
***characterized* in that**
the control device performs the changing of the wheels in succession in such a way that the rear wheel after changing the direction of travel is controlled as the active wheel until reaching a preset value whereupon the control is changed and the rear wheel is controlled to be the passive wheel and the front wheel is controlled to be the active wheel, and after changing directions of travel, the front wheel becomes the passive wheel and remains in its zero position until a change is implemented.

5. Method as claimed in Claim 4,
***characterized* in that**
the preset value triggering the changing of the wheels is the steering position of the wheel at the rear in the direction of travel after resuming travel, so that on reaching the zero position, the control is reversed.

6. Method as claimed in Claim 4,
***characterized* in that**
the preset value triggering the changing of the wheels is the direction of travel of the rear wheel so that only on reaching a preselected speed is the rear wheel changed to the zero position and the control of the wheels reversed.

7. Method as claimed in at least one of the preceding claims,
***characterized* in that**
the wheel at the rear in the direction of travel is changed to the zero position at a speed which depends on its driving speed.

8. Method as claimed in at least one of the preceding claims,
***characterized* in that**
a preset lane offset is taken into account in the changing such that the offset angle of the two wheels with respect to the longitudinal axis of the roller leads to a zero position displacement so that the zero position is reached only when the steering angle of the wheel corresponds to the offset angle.

9. Method as claimed in at least one of the preceding claims,
***characterized* in that**
the control device receives the respective steering angles of the roller wheels as actual values; the control device performs the controlling of the wheels in such a way that the setpoint values input by the driver of the street roller on the basis of steering specifications are compared with the actual values and the steering drives are controlled in the sense of a setpoint-actual value comparison.

10. Method as claimed in Claim 9,
***characterized* in that**
the setpoint value of the passive wheel corresponding to the zero position is preselected by the control device.

11. Dual-wheel street roller with double-pivot steering, whereby the street roller has two roller wheels controllable separately by a control device as a function of the steering mode and/or steering specifications preselected by the driver of the roller, each wheel controllable via a steering drive, whereby the control device (11) is controllable in such a way that it controls the steering drives (17, 18) of the two wheels (2, 3) in a selectable steering mode as a function of the direction of travel, so that the steering drive serves to execute the steering specifications for the wheel at the front in the direction of travel,
***characterized* in that**
actual value pickups (15, 16) are provided on the roller wheels (2, 3) for detecting the steering angle of the wheels and the control device (11) is connected to the actual value pickup in such a way that the control device (11) is controllable during or after a change in the direction of travel such that the steering drive (17, 18) of the wheel (2, 3) at the rear in the direction of travel changes the wheel as a passive wheel into its zero position.

12. Soil compaction device as claimed in Claim 11,
***characterized* in that**
for input of the steering specifications as setpoint values for the control device (11) at least one steering input (12) is provided, and the steering input is connected to the control device.

13. Soil compaction device as claimed in at least Claims 11 and 12,
***characterized* in that**
the control device (11) has a control unit for a setpoint-actual value comparison.

14. Soil compaction device as claimed in at least one of Claims 11 through 12,
***characterized* in that**
the control device (11) is connected to a direction of travel sensor (30) for detecting the direction of travel which is selectable by the driver of the roller.

## Revendications

1. Procédé de commande de l'entraînement directionnel et de déplacement d'un rouleau compresseur à deux bandages et à direction double pivot, dans lequel l'entraînement directionnel des deux bandages (2, 3) de rouleau pouvant être commandés séparément est commandé par un dispositif de commande (11) en fonction des ordres directionnels choisies par le conducteur d'engin et/ou du mode de direction, le dispositif de commande commandant l'entraînement directionnel (17, 18) des deux bandages dans un mode de direction sélectionnable de telle manière que le bandage avant dans la direction de déplacement est commandé en tant que bandage actif par les ordres directionnels,
**caractérisé en ce que**, lors d'un changement de direction de déplacement ou , après celui-ci, le dispositif de commande commande l'entraînement directionnel (17, 18) des deux bandages (2, 3) de telle manière que le bandage arrière dans la direction de déplacement est mis dans sa position zéro par l'entraînement directionnel en tant que bandage passif.

2. Procédé selon la revendication 1, **caractérisé en ce que**, lors de la saisie d'un changement de direction de déplacement ou, après celui-ci, le dispositif de commande bascule la commande de l'entraînement directionnel des bandages.

3. Procédé selon au moins l'une des revendications précédentes, **caractérisé en ce que** le dispositif de commande exécute le basculement des bandages immédiatement de telle manière que, lors du changement de direction de déplacement, le bandage avant actif avant le changement est ensuite commandé comme bandage arrière passif et mis dans la position zéro, tandis que le bandage arrière passif avant le changement, qui se trouvait en position zéro, est ensuite commandé en bandage avant actif conformément à l'ordre directionnel respectif.

4. Procédé selon au moins l'une des revendications précédentes, **caractérisé en ce que** le dispositif de commande effectue le basculement des bandages de manière successive de telle façon que le bandage arrière après le changement de direction de déplacement est commandé comme bandage actif jusqu'à ce qu'il atteigne une valeur prédéterminée, après quoi la commande est alors basculée et le bandage arrière est commandé comme bandage passif et le bandage avant comme bandage actif, et **en ce qu'**après le changement de direction de déplacement jusqu'au basculement, le bandage avant est passif et reste dans sa position zéro.

5. Procédé selon la revendication 4, **caractérisé en ce que** la valeur prédéterminée déclenchant le basculement des bandages est la position directionnelle du bandage arrière dans la direction de déplacement après le redémarrage, de telle sorte que la commande est basculée quand on atteint la position zéro.

6. Procédé selon la revendication 4, **caractérisé en ce que** la valeur prédéterminée déclenchant le basculement des bandages est la vitesse de déplacement du bandage arrière, de telle sorte qu'il faut attendre qu'une vitesse prédéterminée soit atteinte pour que le bandage arrière soit mis dans la position zéro et que la commande des bandages soit basculée.

7. Procédé selon au moins l'une des revendications précédentes, **caractérisé en ce que** la mise en position zéro du bandage arrière après le changement de direction de déplacement s'effectue avec une vitesse dépendant de sa vitesse de déplacement.

8. Procédé selon au moins l'une des revendications précédentes, **caractérisé en ce qu'**un décalage de piste prédéterminé est pris en compte lors du basculement, de telle manière que l'angle de décalage des deux bandages par rapport à l'axe longitudinal du rouleau conduit à un déplacement de la position zéro, de telle sorte que la position zéro est atteinte quand l'angle directionnel des bandages correspond à l'angle de décalage.

9. Procédé selon au moins l'une des revendications précédentes, **caractérisé en ce que** les angles directionnels respectifs des bandages sont transmis au dispositif de commande en tant que valeurs réelles, **en ce que** le dispositif de commande effectue la commande des bandages de telle manière que les valeurs de consigne entrées par les ordres directionnels du conducteur d'engin sont comparées aux valeurs réelles, et **en ce que** les entraînements directionnels sont commandées aux sens d'une comparaison consigne-valeur réelle.

10. Procédé selon au moins la revendication 9, **caractérisé en ce que** la valeur de consigne du bandage passif correspondant à la position zéro est imposée par le dispositif de commande.

11. Rouleau compresseur à deux bandages et à direction double pivot (1), le rouleau compresseur présentant deux bandages qui peuvent être commandés séparément par un dispositif de commande en fonction des ordres directionnels choisis par le conducteur d'engin et/ou du mode directionnel par l'intermédiaire d'un entraînement directionnel pour chacun, le dispositif de commande (11) pouvant être commandé de telle manière que, dans un mode directionnel sélectionnable, il commande les entraînements directionnels (17, 18) des deux bandages (2, 3) en fonction de la direction de déplacement, de telle sorte que l'entrainement directionnel du bandage avant dans la direction de déplacement sert à exécuter les ordres directionnels,
**caractérisé en ce que** des capteurs (15, 16) de valeur réelle sont prévus sur les bandages (2, 3) de rouleau pour relever l'angle directionnel des bandages, et **en ce que** le dispositif de commande (11) est raccordé aux capteurs de valeur réelle, de telle sorte que le dispositif de commande (11), lors d'un changement de direction de déplacement ou après celui-ci, commande l'entrainement directionnel (17, 18) de telle manière que celui-ci met le bandage (2, 3) arrière dans la direction de déplacement en tant que bandage passif dans sa position zéro.

12. Dispositif de compactage des sols selon la revendication 11, **caractérisé en ce que** pour entrer les ordres de commande en tant que valeurs de consigne pour le dispositif de commande (11), il est prévu au moins une saisie directionnelle (12), et **en ce que** la saisie directionnelle est raccordée au dispositif de commande.

13. Dispositif de compactage des sols selon au moins les revendications 11 et 12, **caractérisé en ce que** le dispositif de commande (11) comprend une unité de commande pour une comparaison consigne-valeur réelle.

14. Dispositif de compactage des sols selon au moins l'une des revendications 11 à 12, **caractérisé en ce que** le dispositif de commande (11) est relié à un capteur de direction de déplacement (30) pour relever la direction de déplacement sélectionnable par le conducteur d'engin.
